# EUROPÄISCHE PATENTSCHRIFT

(11) **EP 1 802 263 B1**
(45) Veröffentlichungstag und Bekanntmachung des Hinweises auf die Patenterteilung: **01.02.2012**
(21) Anmeldenummer: 06775799.7
(22) Anmeldetag: 03.08.2006
(51) Int. Cl.: A61G 5/14, A61G 5/10, A61G 5/12, A61G 5/04

(54) **AUFRICHTROLLSTUHL**
STAND-UP WHEELCHAIR
FAUTEUIL MUNI DE MOYENS POUR SE LEVER

(30) Priorität: 08.08.2005 DE 102005038030
(43) Veröffentlichungstag der Anmeldung: 04.07.2007
(73) Patentinhaber: Otto Bock HealthCare GmbH, 37115 Duderstadt (DE)
(72) Erfinder: PERK, Heinrich, 74858 Aglasterhausen (DE)
(74) Vertreter: Rehmann, Thorsten
(86) Internationale Anmeldenummer: PCT/DE2006/001360
(87) Internationale Veröffentlichungsnummer: WO 2007/016907

(56) Entgegenhaltungen:
- EP-A- 1 506 760
- WO-A-03/103561
- JP-A- 2003 079 668
- JP-A- 2003 235 902
- US-A- 5 346 280

## Beschreibung

Die Erfindung betrifft einen Aufrichtrollstuhl mit einem Fahrgestell, an dem zwei Antriebsräder und mindestens ein lenkbares Rad befestigt sind, auf dem eine Aufrichteeinheit mit einer in der Höhe einstellbaren Sitzfläche, einer Rückenlehne und mindestens einer Fußstütze schwenkbar angeordnet ist.

Ein solcher Rollstuhl ist beispielsweise aus der CA 2 458 122 A1 oder der DE 199 12 830 A1 bekannt. Die über einen langen Zeitraum andauernde sitzende Körperhaltung eines Rollstuhlfahrers führt zum physischen Abbau von Körperfunktionen, wie z. B. reduzierte Beweglichkeit der unteren Gliedmaße, Verlangsamung der Darmaktivitäten und Verschlechterung der Blutzirkulation. Durch das Sitzen besteht außerdem die Gefahr eines Dekubitus. Ein Aufrichtrollstuhl hilft, diese Folgen zu reduzieren, da durch Veränderung der Körperhaltung, bis hin zum Stehen, der Abbau der Körperfunktionen reduziert wird. Die schwenkbare Sitzfläche wird mit Rückenlehne und Fußstütze auf ein Fahrgestell montiert. Die korrekte Anpassung an die anatomischen Erfordernisse des Benutzers ist ein sehr wichtiges Kriterium für den Komfort, den der Rollstuhl bietet. Dabei wird das Verhältnis von Sitztiefe und Unterschenkel sowie Oberschenkel zur Lage der Fußstütze anhand der Körperabmessungen des Benutzers bestimmt. Entsprechend der ermittelten Maße wird ein Aufrichtstuhl aus dem Standardprogramm eines Herstellers ausgewählt und gefertigt.

Anwenderspezifisch hergestellte Aufrichtstühle führen bei kleinen und großen Personen oft zu einem unbefriedigenden Komfort, da die standardisierten Größen der Aufrichtstühle auf Personen mit durchschnittlichen Körperabmessungen zugeschnitten sind. Häufig wird die mangelnde Anpassung vom Benutzer nur indirekt wahrgenommen. Scherbewegungen zwischen Körper und Sitzfläche oder ein übermäßig starker Flächendruck der Kniepolster können schon nach kurzer Benutzungszeit einen Dekubitus entstehen lassen. Wird die Sitzhöhe eingestellt, verändert sich bei dem bekannten Rollstuhl der Winkel der Sitzfläche, was unkomfortabel ist.

Aufrichtrollstühle bieten dem Benutzer auch die Möglichkeit, sich sportlich zu betätigen. So kann der Behinderte beispielsweise Golf spielen. In einem solchen Fall ist es besonders wichtig, dass der Rollstuhl in der aufgerichteten Position eine hohe Standfestigkeit bietet. So ist beispielsweise eine Anforderung, dass die Fußstütze in der aufgerichteten Position auf dem Erdboden aufsteht bzw. sich auf ihm abstützt. Die Rückenlehne muss parallel zur Sitzfläche stehen und dem Golfer muss ausreichend Bewegungsmöglichkeit (Drehen des Oberkörpers) geboten werden, um zum Schlag schwingen zu können.

In einem solchen Fall werden vielfach auf dem Golfplatz Aufrichtrollstühle bereitgehalten und von unterschiedlichen Nutzern benutzt. Auf Menschen mit durchschnittlicher Größe zugeschnittene Aufrichtrollstühle können von einer Reihe behinderter Menschen nicht oder nur unter großen Komforteinbußen benutzt werden, weil die Sitzhöhe nicht optimal einstellbar ist.

Aus der CA 2 458 092 A1 ist ein einstellbarer Aufrichtrollstuhl bekannt. Die Sitztiefe kann durch eine verstellbare Rückenlehne verändert werden. Hierzu ist die Rückenlehne teleskopierbar mit dem Untergestell des Sitzes verbunden. Die Teleskoprohre sind im praktischen Betrieb nicht sonderlich funktionell. Um die Stabilität zu gewährleisten, sind geringe Toleranzen erforderlich. Eine häufige Verstellung führt zu Verschleiß. Die beidseitig unter der Sitzfläche angeordneten Teleskoprohre können zueinander verkanten. Die Rückenlehne ist dann schief gegenüber der Sitzfläche und ein sicheres Aufrichten des Rollstuhles ist nicht möglich. Teleskoprohre sind außerdem schmutzanfällig, was aber gerade bei sportlicher Aktivität unvermeidbar ist.

Die EP 1 413 278 A1 offenbart einen Rollstuhl, bei dem der Sitz über ein Gelenk-Parallelogramm, das verschwenkbar ist, in der Höhe einstellbar ist. Mit Veränderung der Sitzhöhe verändert sich auch die Lage des Sitzes in Fahrtrichtung. Je nach Ausbildung des Parallelogrammes wird der Sitz beim Ausfahren nach vorn oder hinten verlagert.

Aus der US 5,346,280 ist ein Aufrichterollstuhl bekannt, bei dem die Sitzfläche beidseitig auf einem aus einer oberen, fest mit der Sitzfläche verbundenen Längsschiene mit einem vorderen Gelenkpunkt und einem hinteren Gelenkpunkt und einer unteren Längsschiene mit einem vorderen Gelenkpunkt und einem hinteren Gelenkpunkt sowie zwei die vorderen Gelenkpunkte und hinteren Gelenkpunkte verbindenden Lenkern gebildeten Gelenk-Parallelogramm gelagert ist. Die Höhe des Sitzes ist bei diesem Rollstuhl nicht einstellbar. Zur Anpassung kann nur die Fußstütze verstellt werden.

Aus der WO 03/103561 A1 ist ein medizinischer Behandlungsstuhl bekannt, dessen Sitzhöhe einstellbar ist. Die Lehne dieses Behandlungsstuhles kann so verstellt werden, dass die Sitzfläche in die Waagerechte verlängert wird, so dass sich eine Liegefläche einstellt. Ein Verschwenken der Sitzfläche in die vertikale Lage ist nicht möglich.

Von dieser Problemlösung ausgehend soll der eingangs beschriebene Aufrichtrollstuhl dahingegen verbessert werden, dass die Sitzhöhe einstellbar ist, ohne dass bei einer Höhenverstellung die Sitzfläche sich abneigt und der Abstand der Fußstütze zum Boden unabhängig von der Sitzhöhe konstant bleibt.

Zur Problemlösung zeichnet sich ein gattungsgemäßer Aufrichtrollstuhl dadurch aus, dass die Sitzfläche beidseitig auf einem aus einer oberen, fest mit der Sitzfläche verbundenen Längsschiene mit einem vorderen Gelenkpunkt und einem hinteren Gelenkpunkt und einer unteren Längsschiene mit einem vorderen Gelenkpunkt und einem hinteren Gelenkpunkt sowie zwei die vorderen Gelenkpunkte und hinteren Gelenkpunkte verbindenden Lenker gebildeten Gelenkparallelogramm gelagert ist und zur Einstellung der Höhe der Sitzfläche das Gelenk-Parallelogramm mit einer Hubeinrichtung verschiebbar ist, ohne wesentliche Veränderung der relativen Lage der Längsschienen zueinander.

Durch die Verschiebung des Gelenkparallelogrammes nach oben und hinten kann die Sitzhöhe verändert werden, ohne dass sich die Neigung der Sitzfläche zur Rückenlehne ändert. Geometrischen Änderungen kann ggf. mit Steuerlenkern entgegengewirkt werden. Die Fußstütze kann dann von der Höhenverstellung völlig entkoppelt und ihre Bewegung von der Aufrichte-Kinematik gesteuert werden.

Hierzu wirkt die Hubeinrichtung vorzugsweise mit einer mit ihrem vorderen Ende im vorderen Gelenkpunkt der oberen Längsschiene und mit ihrem hinteren Ende mit einem fahrgestellfesten Gelenkpunkt gelagerten Längsstrebe und mit einer mit ihrem vorderen Ende über ein Gelenk mit der oberen Längsschiene und mit ihrem hinteren Ende über ein Gelenk mit dem Fahrgestell verbundenen Steuerstrebe zusammen.

Die Steuerstrebe und die Längsstrebe, die fahrgestellfest gelagert sind, drücken den vorderen Teil der Sitzfläche bzw. des Rahmens, auf dem die Sitzfläche angeordnet ist, parallel nach oben, so dass eine Absenkung des vorderen Teils ausgeschlossen ist. Es ändert sich dabei nur die relative Lage der Sitzfläche zum Fahrgestell. Beim Hochfahren der Sitzfläche verlagert sich diese nur geringfügig nach hinten.

Vorteilhaft ist es, wenn der vordere Gelenkpunkt der oberen Längsschiene, der fahrgestellfeste Gelenkpunkt der Längsstrebe, der vordere Gelenkpunkt der Steuerstrebe und der hintere Gelenkpunkt der Steuerstrebe ein Gelenkparallelogramm bilden.

Insbesondere vorteilhaft ist es, wenn die Sitzfläche in der Höhe stufenlos einstellbar ist. Hierzu kann vorzugsweise mindestens eine Spindel verwendet werden. Dabei ist dann insbesondere vorteilhaft, wenn die Spindel selbsthemmend ausgebildet ist.

Da die beiden Gelenkparallelogramme beidseitig zur Sitzfläche angeordnet sind, können auch zwei Hubeinrichtungen vorgesehen sein.

Wenn die hinteren Enden der Längsschienen einen Schlitz aufweisen, in dem die Rückenlehne mit ihren unteren Enden längsverschiebbar aufgenommen ist, lässt sich in einer bevorzugten Ausführungsform auch die Sitztiefe einstellen, so dass eine optimale Sitzposition von dem Benutzer eingenommen werden kann.

Eine Schlitzführung ist sehr robust und wenig schmutzanfällig.

Wenn die Rückenlehne über Kulissensteine in den Schlitzen spürbar und fixierbar ist, können geringe Toleranzen eingehalten werden. Die Kulissensteine bieten auch die Möglichkeit einer stufenlosen Einstellung der Sitztiefe. Verkantungen der Rückenlehne sind ausgeschlossen, so dass die Schwenkbarkeit von Sitzfläche und Rückenlehne auch unter rauen Bedingungen sichergestellt ist. Vorzugsweise ist jeder Kulissenstein an einer Platte angeordnet, die über Gelenke mit der Rückenlehne verbunden ist. Diese Platten können über einen Gelenkgriff miteinander verbunden sein, so dass zum Einstellen der Rückenlehne die beiden Griffe seitlich der Sitzfläche umfasst und mit ihrer Hilfe die Rückenlehne in den Schlitzen verschoben werden kann.

Vorteilhaft ist es, wenn die Längsschienen mit parallel zu den Schlitzen angeordneten Ausnehmungen versehen sind, in die je ein mit der Rückenlehne in Verbindung stehender Rastbolzen eingreifen kann. Die Rastbolzen können an den Griffelementen angeordnet sein. Die Ausnehmungen bieten in Verbindung mit den Rastbolzen den Vorteil, dass die Rückenlehne vorfixiert wird, bevor die Kulissensteine in den Schlitzen verschraubt werden. Sie bieten außerdem den Vorteil, dass die Rückenlehne auch dann gehalten wird, wenn sich die Verschraubung der Kulissensteine lockert.

Die Ausnehmungen sind vorzugsweise zueinander regelmäßig beabstandet, wodurch eine Rasterung für die Rückenlehne realisierbar ist. Anstelle von Ausnehmungen können auch Bohrungen vorgesehen sein.

An den hinteren Enden können die Längsschienen über eine Lasche miteinander verbunden sein.

Mit Hilfe einer Zeichnung soll ein Ausführungsbeispiel der Erfindung nachfolgend näher beschrieben werden:

Es zeigt:

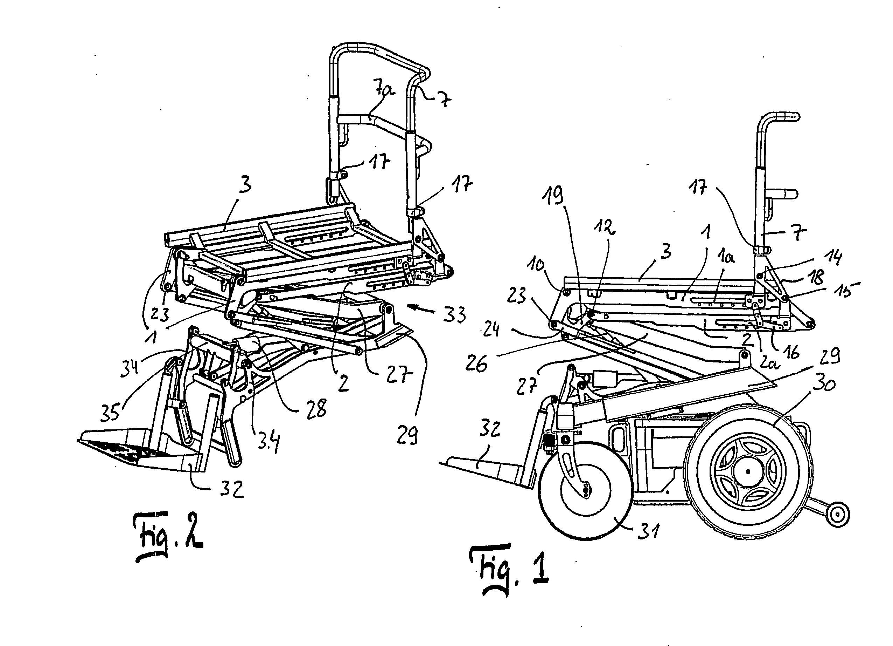

- Figur 1: einen Aufrichtrollstuhl in Seitenansicht;
- Figur 2: die Aufrichteeinheit;

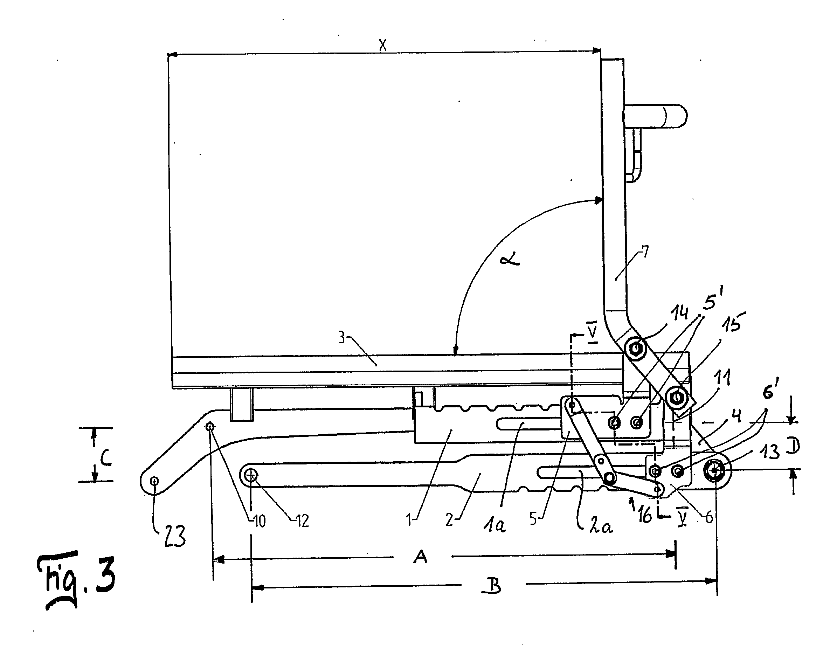

- Figur 3: eine Teildarstellung der Verstellkinematik;
- Figur 4: eine Teildarstellung der Rückansicht nach Figur 3;
- Figur 5: den Schnitt entlang der Linie V-V nach Figur 3;
- Figur 6: die Aufrichteeinheit in Seitenansicht;

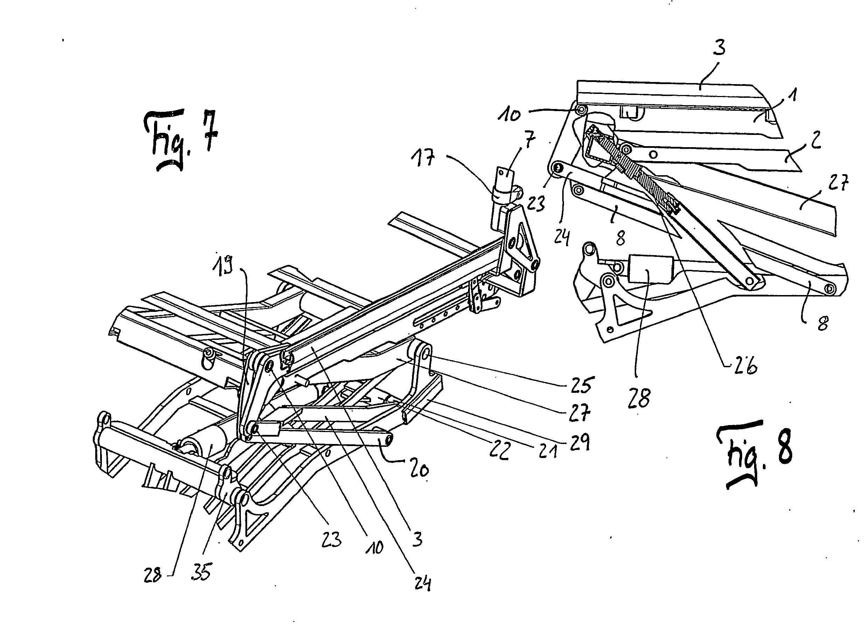

- Figur 7: eine perspektivische Darstellung der Aufrichteeinheit;
- Figur 8: eine Teilseitenansicht der Aufrichteeinheit;

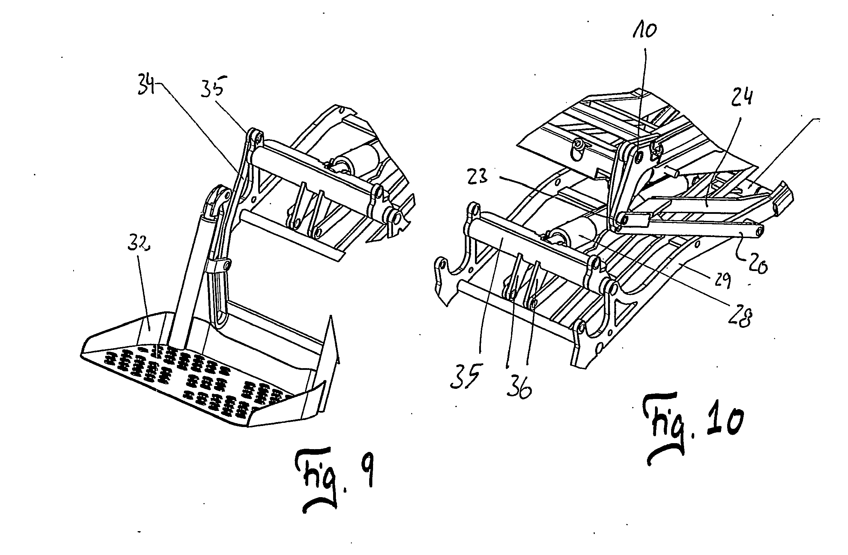

- Figur 9: eine perspektivische Darstellung eines Teiles der Aufrichteeinheit;
- Figur 10: eine weitere perspektivische Teildarstellung der Aufrichteeinheit.

Der Rollstuhl besteht aus dem Fahrgestell 29 mit der darauf befestigten Aufrichteeinheit 33, den Antriebsrädern 30 und den beiden lenkbaren Vorderrädern 31. Die Aufrichteeinheit 33 weist eine Sitzfläche 3, eine Rückenlehne 7 und eine Fußstütze 32 auf. Über einen Aktuator 28 kann die Aufrichteeinheit 33 geschwenkt werden. Die Sitzfläche 3 gelangt dazu in eine vertikale Lage. Die Rückenlehne 7 behält ihre vertikale Lage bei und steht dann parallel zur Sitzfläche 3. Gleichzeitig mit dem Abkippen der Sitzfläche 3 wird die Fußstütze 32 abgesenkt und stützt sich in der gestreckten Position der Aufrichteeinheit 31 auf dem Boden ab. Zum Aufrichten der Sitzfläche 3 und der Rückenlehne 7 bewegt der Aktuator 28 die Querstrebe 22 und somit den Gelenkpunkt 21 auf einer geführten Längsbahn.

Unterhalb der Sitzfläche 3 sind zwei Längsschienen 1, 2 angeordnet. Die obere Längsschiene 1 ist fest mit der Sitzfläche 3 verbunden und weist einen vorderen Gelenkpunkt 10 und einen hinteren Gelenkpunkt 11 auf. Die untere Längsschiene 2 weist einen vorderen Gelenkpunkt 12 und einen hinteren Gelenkpunkt 13 auf. Über die Gelenkpunkte 10, 12; 11, 13 sind die obere Längsschiene 1 und die untere Längsschiene 2 gelenkig miteinander verbunden, wobei ein Gelenke-Parallelogramm ausgebildet ist. D. h., der Abstand C der vorderen Gelenkpunkte 10, 12 ist identisch zu dem Abstand D der hinteren Gelenkpunkte 11, 13 und der Abstand A der Gelenkpunkte 10, 11 der oberen Längsschiene ist identisch zum Abstand B der Gelenkpunkte 12, 13 der unteren Längsschiene 2.

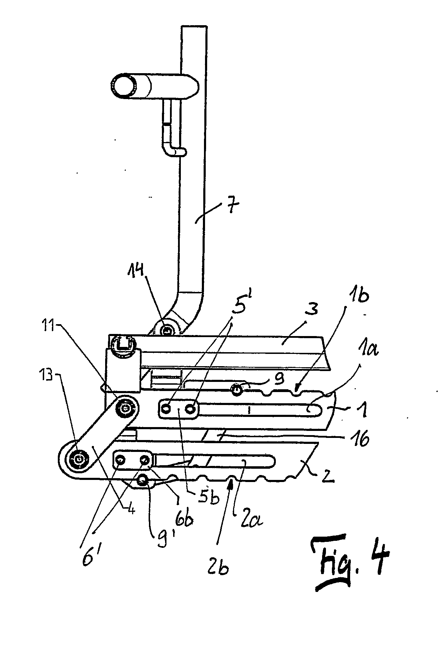

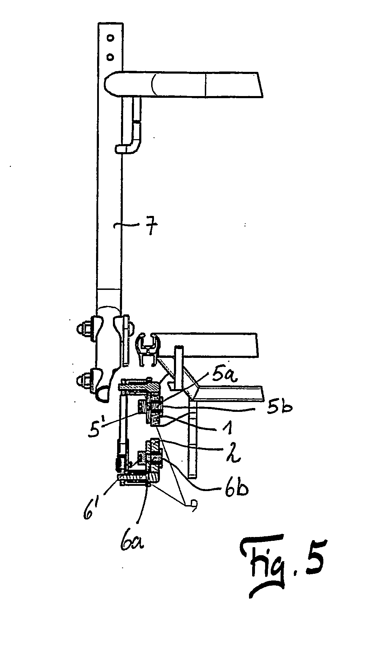

Die Längsschienen 1, 2 weisen im hinteren Bereich einen Längsschlitz 1 a, 2a auf, der umfangsseitig geschlossen ist. In den Schlitzen 1 a, 2a laufen Kulissensteine 5a, 6a (vgl. Figur 5), die jeweils an einer Platte 5, 6 befestigt sind. Über eine Spannplatte 5b, 6b können die Kulissensteine 5a, 6a in den Schlitzen 1 a, 2a festgesetzt werden, bzw. die Platten 5, 6 gegenüber den Längsschienen 1, 2 verspannt werden. An den Platten 5, 6 ist über die Gelenke 14, 15 die Rückenlehne 7, die eine Querstrebe 7a aufweist, gelenkig befestigt. Am gegenüberliegenden Ende der Platten 5, 6 ist eine aus drei Teilen bestehende Griffeinheit 16 befestigt. An der Griffeinheit 16, die gelenkig an den Platten 5, 6 befestigt ist, sind ein oberer Bolzen 9 und ein unterer Bolzen 9' angeordnet. Die Bolzen 9, 9' wirken mit Ausnehmungen 1b, 2b zusammen, die an der Oberseite der Längsschiene 1 bzw. der Unterseite der Längsschiene 2 vorgesehen sind und dienen zur Verrastung der Rückenlehne 7 in Längsrichtung. Der Winkel, in dem die miteinander wirksamen Ausnehmungen 1 b, 2b (vgl. Figur 4) liegen, entspricht dem Winkel der Strecke zwischen den Gelenkpunkten 10, 12 und 11, 13.

Zum Verstellen der Rückenlehne 7 und Einstellen der Sitztiefe X werden die Spannplatten 5b, 6b, die über die Verschraubung 5', 6' mit den Platten 5, 6 verspannt sind, gelöst, die beiden Griffeinheiten 16 auseinander gezogen, so dass die Rastbolzen 9, 9' außer Eingriff mit den Ausnehmungen 1 b, 2b gelangen und die Rückenlehne 7 dann um den gewünschten Betrag vor oder zurückgeschoben wird. Die Rastbolzen werden in die entsprechenden Ausnehmungen 1 b, 2b eingeführt und die Verschraubung 5', 6' wieder angezogen.

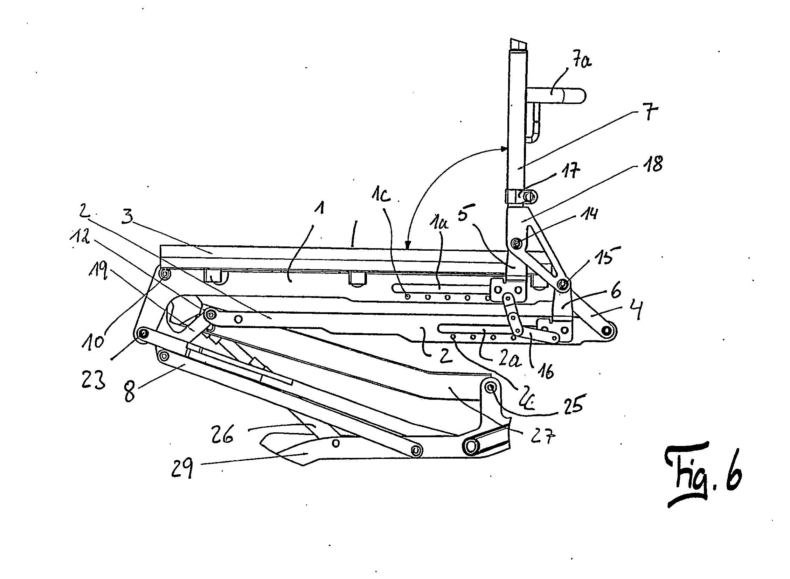

Wie Figur 6 zeigt, können anstelle von regelmäßig beabstandeten Ausnehmungen 1 b, 2b auch unterhalb der Schlitze verlaufende Bohrungen 1 c, 2c vorgesehen sein, in die die Rastbolzen 9, 9' einschnappen können. Die Rückenlehne 7 kann zweiteilig sein und über zwei Klemmschellen 17 mit der Aufrichteeinheit 33 verbunden sein. Eine solche Ausgestaltung hat den Vorteil, dass die Rückenlehne 7 leicht und schnell abgenommen werden kann, wenn der Aufrichterollstuhl z. B. in einem Kraftfahrzeug transportiert werden soll.

Der untere, mit den Platten 5, 6 gelenkig verbundene Teil der Rückenlehne 7 kann einstückig mit der Rückenlehne 7 ausgebildet oder als Dreieckslenker 18 gestaltet sein. Durch eine Änderung der Abstände D der Gelenkpunkte 11, 13 und B der Gelenkpunkte 12, 13 kann der Winkel α der Rückenlehne 7 relativ zur Sitzfläche 3 eingestellt werden.

Aus den Figuren ist ersichtlich, dass die Sitzfläche 3 beidseitig auf einem aus der oberen Längsschiene 1, der unteren Längsschiene 2 sowie zwei die beiden vorderen Gelenkpunkte und hinteren Gelenkpunkte verbindenden Lenkern 4, 19 gebildeten Gelenkparallelogrammen gelagert ist. Zur Einstellung der Höhe der Sitzfläche 3 wird das Gelenkparallelogramm 10-12, 11-13 mittels der selbsthemmend ausgestalteten Spindel 26 auf einem Kreisbogen nach oben und hinten verschoben. Mit der Spindel 26 zusammen wirken die mit ihrem hinteren Ende im Gelenkpunkt 25 am Fahrgestell 29 gelagerte Längsstrebe 27, die mit ihrem vorderen Ende im Gelenkpunkt 12 der unteren Längsschiene 2 angelenkt ist sowie die Steuerstrebe 24, die mit ihrem unteren Ende ebenfalls am Fahrgestell 29 gelenkig gelagert ist und mit ihrem oberen Ende in einem weiteren Gelenkpunkt 23 an der oberen Längsschiene 1 gelagert ist, zusammen. Die Ausgleichsstrebe 8, steht über die an ihrem vorderen Ende gelenkig gelagerte Gelenkplatte 19 mit den Gelenkpunkten 12 der unteren Längsschiene 2 und dem Gelenkpunkt 10 der oberen Längsschiene 1 in Verbindung. An ihrem unteren Ende ist die Ausgleichsstrebe 8 gelenkig am Fahrgestell 29 befestigt. Die Gelenkplatte 19 und die Ausgleichsstrebe 8 haben die Aufgabe, den Gelenkpunkt 12 bei der Auf- bzw. Abwärtsbewegung der Sitzfläche 3 in Position zu halten. Somit ändert sich der Rückenwinkel α bei der Auf- bzw. Abwärtsbewegung der Sitzfläche 3 nur geringfügig.

Die Fußstütze 32 ist über eine beidseitig gelenkig gelagerte Vertikalstrebe 34 befestigt und wird von dieser beim Aufrichten der Sitzfläche 3 durch den Aktuator 28 vertikal abgesenkt. Hierzu setzt der Umlenkhebel 35, der über die Lenker 36 mit dem Aktuator 28 verbunden ist, die Drehbewegung in eine vertikale Bewegung um.

Die Länge der Spindel 26 ist mittels eines nicht dargestellten Werkzeuges einstellbar. Anstelle einer Spindel 26 kann als Hubeinrichtung aber auch eine Gasdruckfeder oder eine elektrische Linearverstellung eingesetzt werden.

Durch eine Veränderung der Lage des Gelenkpunktes 21 kann die Neigung der Sitzfläche 3 beeinflusst werden.

### Bezugszeichenliste:

- 1: Längsschiene
- 1 a: Schlitz/Längsschlitz
- 1 b: Ausnehmung
- 1 c: Loch/Bohrung
- 2: Längsschiene
- 2a: Schlitz/Längsschlitz
- 2b: Ausnehmung
- 2c: Loch/Bohrung
- 3: Sitzfläche
- 4: Lenker
- 5: Platte
- 5a: Kulissenstein
- 5b: Spannplatte
- 5': Verschraubung
- 6: Platte
- 6a: Kulissenstein
- 6b: Spannplatte
- 6': Verschraubung
- 7: Rückenlehne
- 7a: Querstrebe
- 8: Ausgleichsstrebe
- 9: Rastbolzen
- 9': Rastbolzen
- 10: Gelenk/Gelenkpunkt
- 11: Gelenk/Gelenkpunkt
- 12: Gelenk/Gelenkpunkt
- 13: Gelenk/Gelenkpunkt
- 14: Gelenkpunkt
- 15: Gelenkpunkt
- 16: Griffeinheit
- 17: Klemmschelle
- 18: Lenker
- 19: Lenker
- 20: Ausgleichsstrebe
- 21: Gelenk/Gelenkpunkt
- 22: Querstrebe
- 23: Gelenkpunkt
- 24: Steuerstrebe
- 25: Gelenkpunkt
- 26: Hubeinrichtung/Spindel
- 27: Längsstrebe
- 28: Aktuator
- 29: Fahrgestell
- 30: Antriebsrad
- 31: gelenktes Rad
- 32: Fußstütze
- 33: Aufrichteeinheit
- 34: Vertikalstrebe
- 35: Umlenkhebel
- 36: Lenker

## Patentansprüche

1. Aufrichtrollstuhl mit einem Fahrgestell (29), an dem zwei Antriebsräder (30) und mindestens ein lenkbares Rad (31) befestigt sind, auf dem eine Aufrichteeinheit (33) mit einer in der Höhe einstellbaren Sitzfläche (3), einer Rückenlehne (7) und mindestens einer Fußstütze (32) schwenkbar angeordnet ist, **dadurch gekennzeichnet, dass** die Sitzfläche (3) beidseitig auf einem aus einer oberen, fest mit der Sitzfläche (3) verbundenen Längsschiene (1) mit einem vorderen Gelenkpunkt (10) und einem hinteren Gelenkpunkt (11) und einer unteren Längsschiene (2) mit einem vorderen Gelenkpunkt (12) und einem hinteren Gelenkpunkt (13) sowie zwei die vorderen Gelenkpunkte (10, 12) und hinteren Gelenkpunkte (11, 13) verbindenden Lenkern (4, 19) gebildeten Gelenk-Parallelogramm gelagert ist, und dass zur Einstellung der Höhe der Sitzfläche (3) das Gelenk-Parallelogramm mit einer Hubeinrichtung (26) verschiebbar ist, ohne wesentliche Veränderung der relativen Lage der Längsschienen (1) und (2) zueinander.

2. Aufrichtrollstuhl nach Anspruch 1, **dadurch gekennzeichnet, dass** die Hubeinrichtung (26) mit einer mit ihrem vorderen Ende im vorderen Gelenkpunkt (10) der oberen Längsschiene (1) und mit ihrem hinteren Ende mit einem fahrgestellfesten Gelenkpunkt (25) gelagerten Längsstrebe (27) und mit einer mit ihrem vorderen Ende über ein Gelenk (23) mit der oberen Längsschiene (1) und mit ihrem hinteren Ende über ein Gelenk (21) mit dem Fahrgestell (29) verbundenen Steuerstrebe (24) zusammenwirkt.

3. Aufrichtrollstuhl nach Anspruch 2, **dadurch gekennzeichnet, dass** der vordere Gelenkpunkt (10) der oberen Längsschiene (1), der fahrgestellfeste Gelenkpunkt (25) der Längsstrebe (27), das fahrgestellfeste Gelenk (21) der Steuerstrebe (24) und das vordere Gelenk (23) der Steuerstrebe (24) ein Parallelogramm bilden.

4. Aufrichtrollstuhl nach Anspruch 1, **dadurch gekennzeichnet, dass** die Sitzfläche (3) in der Höhe stufenlos einstellbar ist.

5. Aufrichtrollstuhl nach Anspruch 1, **dadurch gekennzeichnet, dass** die Hubeinrichtung (26) mindestens eine Spindel ist.

6. Aufrichtrollstuhl nach Anspruch 5, **dadurch gekennzeichnet, dass** die Spindel (26) selbsthemmend ausgebildet ist.

7. Aufrichtrollstuhl nach einem oder mehreren der vorstehenden Ansprüche, **dadurch gekennzeichnet, dass** die hinteren Enden der Längsschienen (1, 2) einen Schlitz (1a, 2a) aufweisen, in dem die Rückenlehne (7) mit ihren unteren Enden längsverschiebbar aufgenommen ist.

8. Aufrichtrollstuhl nach Anspruch 7, **dadurch gekennzeichnet, dass** die Rückenlehne (7) über Kulissensteine (5a, 6a) in den Schlitzen (1 a, 2a) geführt ist und gegenüber den Längsschienen (1, 2) fixierbar ist.

9. Aufrichtrollstuhl nach Anspruch 8, **dadurch gekennzeichnet, dass** jeder Kulissenstein (5a, 6a) an einer Platte (5, 6) angeordnet ist, die über ein Gelenk (14, 15) mit der Rückenlehne (7) verbunden ist.

10. Aufrichtrollstuhl nach Anspruch 7, **dadurch gekennzeichnet, dass** die Längsschienen (1, 2) mit parallel zu den Schlitzen (1a, 2a) angeordneten Ausnehmungen (1b, 2b) versehen sind, die in zu den Schlitzen (1a, 2a) parallelen Ebenen angeordnet sind, in die je ein mit der Rückenlehne (7) in Verbindung stehender Rastbolzen (9, 9') eingreifen kann.

11. Aufrichtrollstuhl nach Anspruch 10, **dadurch gekennzeichnet, dass** die Rastbolzen (9) an einer mehrteiligen Griffeinheit (16) angeordnet sind.

12. Aufrichtrollstuhl nach Anspruch 11, **dadurch gekennzeichnet, dass** die Teile der Griffeinheit (16) gelenkig miteinander verbunden sind.

13. Aufrichtrollstuhl nach Anspruch 10, **dadurch gekennzeichnet, dass** die Ausnehmungen (1 b, 2b) zueinander regelmäßig beabstandet sind.

14. Aufrichtrollstuhl nach Anspruch 1, **dadurch gekennzeichnet, dass** eine Ausgleichsstrebe (8) mit ihrem vorderen Ende gelenkig an einem der Lenker (19) und mit ihrem hinteren Ende gelenkig am Fahrgestell (29) befestigt ist.

## Claims

1. Stand-up wheelchair with a chassis (29), to which two driving wheels (30) and at least one steerable wheel (31) are fastened and on which a stand-up unit (33) having a height-adjustable seat surface (3), a backrest (7) and at least one footrest (32) is pivotably arranged, **characterized in that** the seat surface (3) is mounted on both sides on an articulated parallelogram structure which is formed from an upper longitudinal rail (1), which is connected fixedly to the seat surface (3) and has a front hinge point (10) and a rear hinge point (11), and from a lower longitudinal rail (2) having a front hinge point (12) and a rear hinge point (13) , and from two links (4, 9) connecting the front hinge points (10, 12) and rear hinge points (11, 13), and **in that**, in order to adjust the height of the seat surface (3), the articulated parallelogram structure can be displaced by a lifting device (26) without a substantial change in the relative position of the longitudinal rails (1) and (2) to each other.

2. Stand-up wheelchair according to Claim 1, **characterized in that** the lifting device (26) interacts with a longitudinal strut (27), which is mounted at the front end thereof in the front hinge point (10) of the upper longitudinal rail (1) and at the rear end thereof at a chassis-mounted hinge point (25), and with a control strut (24), which is connected at the front end thereof via a hinge (23) to the upper longitudinal rail (1) and at the rear end thereof via a hinge (21) to the chassis (29).

3. Stand-up wheelchair according to Claim 2, **characterized in that** the front hinge point (10) of the upper longitudinal rail (1), the chassis-mounted hinge point (25) of the longitudinal strut (27), the chassis-mounted hinge (21) of the control strut (24) and the front hinge (23) of the control strut (24) form a parallelogram structure.

4. Stand-up wheelchair according to Claim 1, **characterized in that** the seat surface (3) can be infinitely variably adjusted in height.

5. Stand-up wheelchair according to Claim 1, **characterized in that** the lifting device (26) involved at least one spindle.

6. Stand-up wheelchair according to Claim 5, **characterized in that** the spindle (26) is of self-locking design.

7. Stand-up wheelchair according to one or more of the preceding claims, **characterized in that** the rear ends of the longitudinal rails (1, 2) have a slot (1a, 2a) in which the backrest (7) is accommodated by the lower ends thereof in a longitudinally displaceable manner.

8. Stand-up wheelchair according to Claim 7, **characterized in that** the backrest (7) is guided in the slots (1a, 2a) via sliding blocks (5a, 6a) and can be fixed in relation to the longitudinal rails (1, 2).

9. Stand-up wheelchair according to Claim 8, **characterized in that** each sliding block (5a, 6a) is arranged on a plate (5, 6) which is connected to the backrest (7) via a hinge (14, 15).

10. Stand-up wheelchair according to Claim 7, **characterized in that** the longitudinal rails (1, 2) are provided with recesses (1b, 2b) which are arranged parallel to the slots (1a, 2a) and are arranged in planes which are parallel to the slots (1a, 2a) and in each of which a latching bolt (9, 9') connected to the backrest (7) can engage.

11. Stand-up wheelchair according to Claim 10, **characterized in that** the latching bolts (9) are arranged on a multi-part handle unit (16).

12. Stand-up wheelchair according to Claim 11, **characterized in that** the parts of the handle unit (16) are connected to one another in an articulated manner.

13. Stand-up wheelchair according to Claim 10, **characterized in that** the recesses (1b, 2b) are spaced apart regularly from one another.

14. Stand-up wheelchair according to Claim 1, **characterized in that** an equalizing strut (8) is fastened at the front end thereof in an articulated manner to one of the links (19) and at the rear end thereof in an articulated manner to the chassis (29).

## Revendications

1. Fauteuil roulant muni de moyens pour se lever, le fauteuil comprenant un châssis (29) auquel sont fixées deux roues motrices (30) et au moins une roue dirigeable (31), une unité de moyens pour se lever (33) étant agencée pivotante sur le fauteuil et comprenant un siège (3) réglable en hauteur, un dossier (7) et au moins un repose-pied (32), **caractérisé en ce que** le siège (3) est monté des deux côté sur un parallélogramme articulé formé par une barre longitudinale supérieure (1) solidaire du siège (3) et ayant un point d'articulation avant (10) et un point d'articulation arrière (11), par une barre longitudinale inférieure (2) ayant un point d'articulation avant (12) et un point d'articulation arrière (13), ainsi que par deux bielles (4, 19) reliant les points d'articulation avant (10, 12) et les points d'articulation arrière (11, 13), et **en ce que**, pour le réglage de la hauteur du siège (3), le parallélogramme articulé est déplaçable à l'aide d'un dispositif de levage (26), sans modification sensible de la position relative des barres longitudinales (1) et (2) l'une par rapport à l'autre.

2. Fauteuil roulant muni de moyens pour se lever selon la revendication 1, **caractérisé en ce que** le dispositif de levage (26) coopère d'une part avec une entretoise longitudinale (27) montée à son extrémité avant dans le point d'articulation avant (10) de la barre longitudinale supérieure (1) et à son extrémité arrière avec un point d'articulation (25) solidaire du châssis, et d'autre part avec une entretoise de pilotage (24) reliée par son extrémité avant à la barre longitudinale supérieure (1), par l'intermédiaire d'une articulation (23), et reliée par son extrémité arrière au châssis (29), par l'intermédiaire d'une articulation (21).

3. Fauteuil roulant muni de moyens pour se lever selon la revendication 2, **caractérisé en ce que** le point d'articulation avant (10) de la barre longitudinale supérieure (1), le point d'articulation solidaire du châssis (25), de l'entretoise longitudinale (27), le point d'articulation solidaire du châssis (21), de l'entretoise de pilotage (24) et l'articulation avant (23) de l'entretoise de pilotage (24) forment un parallélogramme.

4. Fauteuil roulant muni de moyens pour se lever selon la revendication 1, **caractérisé en ce que** le siège (3) est à réglage en hauteur continu.

5. Fauteuil roulant muni de moyens pour se lever selon la revendication 1, **caractérisé en ce que** le dispositif de levage (26) est au moins une vis.

6. Fauteuil roulant muni de moyens pour se lever selon la revendication 5, **caractérisé en ce que** la vis (26) est formée autobloquante.

7. Fauteuil roulant muni de moyens pour se lever selon l'une ou plusieurs des revendications précédentes, **caractérisé en ce que** les extrémités arrière des barres longitudinales (1, 2) présentent une fente (1a, 2a) qui reçoit le dossier (7) par l'extrémité inférieure de celui-ci, avec possibilité de déplacement longitudinal.

8. Fauteuil roulant muni de moyens pour se lever selon la revendication 7, **caractérisé en ce que** le dossier (7) est guidé dans les fentes (1a, 2a) par l'intermédiaire de glisseurs (5a, 6a) et est fixable par rapport aux barres longitudinales (1, 2).

9. Fauteuil roulant muni de moyens pour se lever selon la revendication 8, **caractérisé en ce que** chaque glisseur (5a, 6a) est agencé sur une plaque (5, 6) qui est reliée au dossier (7) par l'intermédiaire d'une articulation (14, 15).

10. Fauteuil roulant muni de moyens pour se lever selon la revendication 7, **caractérisé en ce que** les barres longitudinales (1, 2) sont munies d'évidements (1b, 2b) agencés parallèlement aux fentes (1a, 1b) et qui sont agencés dans des plans parallèles aux fentes (1a, 1b), et dans chacun desquels peut s'engager un boulon d'arrêt (9, 9') qui est en liaison avec le dossier (7).

11. Fauteuil roulant muni de moyens pour se lever selon la revendication 10, **caractérisé en ce que** les boulons d'arrêt (9) sont agencés sur une unité de prise (16) constituée de plusieurs parties.

12. Fauteuil roulant muni de moyens pour se lever selon la revendication 11, **caractérisé en ce que** les parties de l'unité de prise (16) sont reliées entre elles de façon articulée.

13. Fauteuil roulant muni de moyens pour se lever selon la revendication 10, **caractérisé en ce que** les évidements (1b, 2b) sont régulièrement espacés les uns des autres.

14. Fauteuil roulant muni de moyens pour se lever selon la revendication 1, **caractérisé en ce qu'**une entretoise de compensation (8) est fixée, à son extrémité avant de façon articulée à l'une des bielles (19), et à son extrémité arrière de façon articulée au châssis (29).
